# EUROPEAN PATENT APPLICATION

(11) **EP 4 151 081 A1**
(43) Date of publication of application: **22.03.2023**
(21) Application number: 21804836.1
(22) Date of filing: 10.05.2021
(51) Int. Cl.: A01G 18/22

(54) **INDOOR ENVIRONMENT ADJUSTMENT METHOD AND INDOOR ENVIRONMENT ADJUSTMENT SYSTEM**

(30) Priority: 12.05.2020 JP 2020083970
(71) Applicant: Lala Corporation, Niigata-shi, Niigata 950-0943 (JP)
(72) Inventor: KOMABA, Hiromi, Niigata-shi, Niigata 950-0943 (JP)
(74) Representative: Marks & Clerk LLP
(86) International application number: PCT/JP2021/017660
(87) International publication number: WO 2021/230188

(57) **Abstract**

Provided are an indoor environment adjustment method that contributes to stabilization of the quality of a fungal bed and an indoor environment adjustment system capable of implementing the indoor environment adjustment method. The indoor environment adjustment method of the present invention is a method of adjusting an environment in a small room (20) in which a fungal bed production device (10) is installed, and the indoor environment adjustment method includes: acquiring outdoor environment information on an outside of the small room (20); and adjusting an indoor environment inside the small room (20) based on the acquired outdoor environment information. The indoor environment adjustment system of the present invention is a system for adjusting the environment in the small room (20) in which the fungal bed production device (10) is installed, and the indoor environment adjustment system includes: indoor environment adjustment means (30) for adjusting an indoor environment inside the small room (20); outdoor information acquisition means (40) for acquiring outdoor environment information on an outside of the small room (20); and control means (50) for controlling the indoor environment adjustment means (30) based on the outdoor environment information acquired by the outdoor information acquisition means (40).

## Description

### Technical Field

The present invention relates to a method of and a system for adjusting an environment inside a room in which a fermented fungal bed production mixer (fungal bed production device) is installed.

### Background Art

As one of methods of cultivating mushrooms, there is known fungal bed cultivation. In the fungal bed cultivation, a fungal bed in which mushroom inocula are inoculated in a culture medium using a wood substrate is mainly used. Hitherto, as a fungal bed production device, there has been proposed a device for producing a fermented fungal bed by inoculating, in a storage container, mushroom inocula in a culture medium for which anaerobic fermentation or aerobic fermentation is promoted while stirring a substrate in the storage container with stirring means (Patent Literature 1).

The fungal bed production device is configured to control voltage and power to be supplied to a heater or the like based on a value measured by a temperature sensor installed outside the storage container, to thereby enable a temperature inside the storage container to be maintained within a preferred temperature range (range of from 40°C to 90°C, or more preferred range of from 50°C to 80°C) for the anaerobic fermentation or aerobic fermentation of the culture medium.

### Citation List

### Patent Literature

[PTL 1] JP 2016-041027 A

### Summary of Invention

### Technical Problem

However, even when a temperature inside a storage container can be controlled as in a related-art fungal bed production device, quality of a finished fungal bed differs from season to season, and it has been difficult to stabilize the quality of the fungal bed.

The present invention has been made in view of such circumstances, and addresses the problem to be solved by providing an indoor environment adjustment method that contributes to stabilization of the quality of a fungal bed and an indoor environment adjustment system capable of implementing the indoor environment adjustment method.

### Solution to Problem

The inventor of the present invention has conducted extensive research to find out the following, and consequently have invented an indoor environment adjustment method and an indoor environment adjustment system according to the present application.
(1) It becomes easier for a temperature of a storage container to drop as the room temperature becomes lower due to radiant heat.
(2) It becomes easier for the room temperature to drop as the outdoor temperature becomes lower due to radiant heat.
(3) A temperature inside the storage container greatly varies depending on where the temperature is measured.
(4) A temperature sensor merely measures a temperature of a part of the storage container.
(5) When the temperature inside the storage container is low, microflora is changed, which exerts an influence on the quality of a produced fungal bed.

### [Indoor Environment Adjustment Method]

An indoor environment adjustment method according to the present invention is a method of adjusting an environment in a small room in which a fungal bed production device is installed, and the indoor environment adjustment method includes: acquiring outdoor environment information on an outside of the small room; and adjusting an indoor environment inside the small room based on the acquired outdoor environment information.

In the indoor environment adjustment method, it is also possible to acquire, as the outdoor environment information, future outdoor environment information (for example, outdoor environment information at a start time point of production of a culture medium in the fungal bed production device, or outdoor environment information at one time point or two or more time points during a period from start of the production until completion of the production) and adjust the indoor environment inside the small room based on the acquired outdoor environment information.

In the indoor environment adjustment method, it is possible to acquire, as the outdoor environment information, one of or two or more of a temperature, a humidity, and weather outside the small room.

### [Indoor Environment Adjustment System]

An indoor environment adjustment system according to the present invention is a system for adjusting an environment in a small room in which a fungal bed production device is installed, and the indoor environment adjustment system includes: indoor environment adjustment means for adjusting an indoor environment inside the small room; outdoor information acquisition means for acquiring outdoor environment information on an outside of the small room; and control means for controlling the indoor environment adjustment means based on the outdoor environment information acquired by the outdoor information acquisition means.

In the indoor environment adjustment system, it is possible to use, as the outdoor information acquisition means, means capable of acquiring future outdoor environment information (for example, outdoor environment information at the start time point of production of a culture medium in the fungal bed production device, or outdoor environment information at one time point or two or more time points during the period from the start of the production until the completion of the production).

In the indoor environment adjustment system, it is possible to use, as the outdoor information acquisition means, means capable of acquiring, as the outdoor environment information, both or any one of at least the temperature and the humidity outside the small room.

In the indoor environment adjustment system, it is also possible to communicably connect the outdoor information acquisition means and the control means to each other. In this case, the control means may be configured to acquire outdoor environment information transmitted from the outdoor information acquisition means and control the indoor environment adjustment means based on the acquired outdoor environment information.

In the indoor environment adjustment system, the control means may include a monitor on which a manually operable operating unit is to be displayed. In this case, the monitor may be configured to display one of or two or more of at least an outdoor information display section for displaying the outdoor environment information, an indoor information display section for displaying indoor environment information on the inside of the small room, and a device information display section for displaying device information relating to the fungal bed production device.

### Advantageous Effects of Invention

According to the indoor environment adjustment method and the indoor environment adjustment system of the present invention, it is possible to maintain the temperature inside the storage container (inside a tank), which exerts an influence on how well the fungal bed is to be produced, at an appropriate temperature by adjusting the temperature in the small room based on the outdoor environment information on the outside of the small room, and hence it is possible to stabilize the quality of the fungal bed.

### Brief Description of Drawings

FIG. 1 is an explanatory view for illustrating an example of an indoor environment adjustment system according to the present invention.
FIG. 2 is an explanatory view of the indoor environment adjustment system illustrated in FIG. 1 when viewed from a left side thereof.
FIG. 3 is an explanatory view of the indoor environment adjustment system illustrated in FIG. 1 when viewed from a plane side thereof.
FIG. 4 is a block diagram for illustrating an example of control means.
FIG. 5 is an explanatory view for illustrating an example of an operation screen to be displayed on a monitor.
FIG. 6(a) is a flow chart for illustrating an example of a case in which indoor environment adjustment means is automatically controlled, and FIG. 6(b) is a flow chart for illustrating an example of a case in which the indoor environment adjustment means is controlled after manual input.

### Description of Embodiments

### (Embodiment of Indoor Environment Adjustment Method)

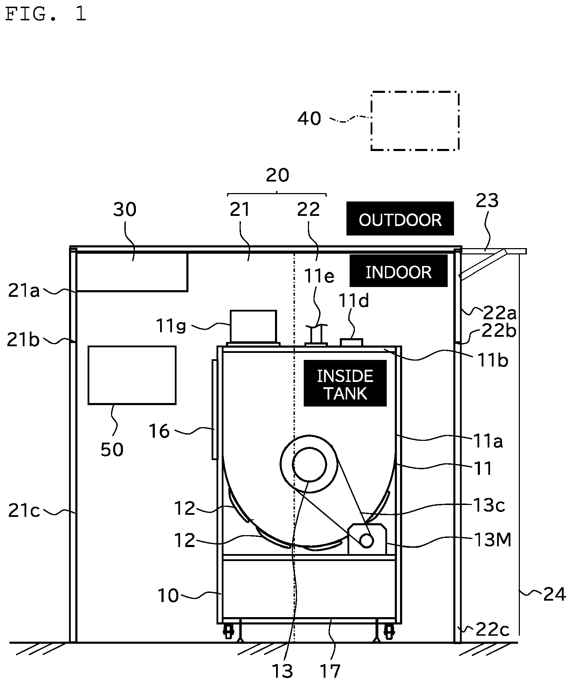

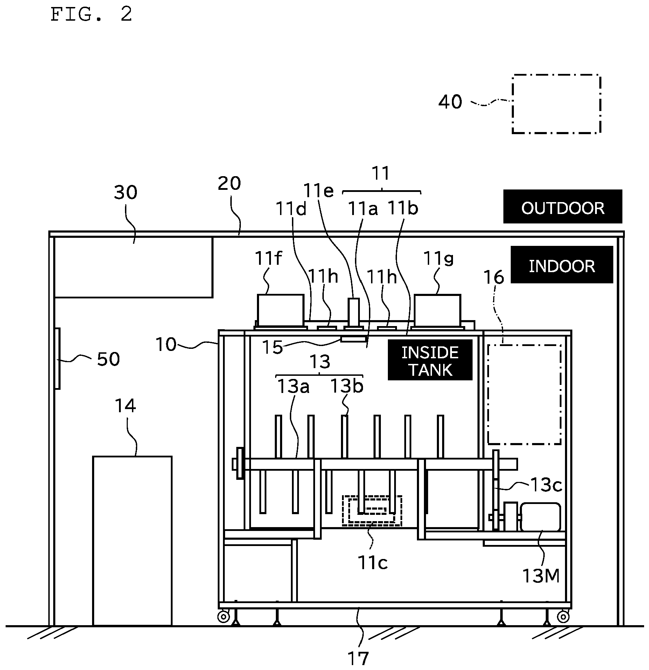

An indoor environment adjustment method according to an embodiment of the present invention is described by taking an example with reference to the accompanying drawings. The indoor environment adjustment method according to the present invention is a method of adjusting an environment in a small room 20 in which a fungal bed production device 10 is installed as illustrated in FIG. 1 and FIG. 2, and the method includes: acquiring information relating to the environment outside the small room 20 (hereinafter referred to as "outdoor environment information"); and adjusting an air environment inside the small room 20 (hereinafter referred to as "indoor environment") based on the acquired outdoor environment information.

The outdoor environment information includes, for example, information such as an atmospheric pressure, weather, a wind speed, and a wind direction in addition to a temperature and a humidity. The outdoor environment information also includes not only information at a time of acquisition but also prediction information for a future time (several hours later). For example, the outdoor environment information (such as temperature, humidity, and weather) at a start time of fungal bed production is included. One type of information (for example, temperature information) suffices, but two or more types of information (for example, temperature information and weather information) can also be acquired. It is preferred to acquire both or any one of at least the temperature and the humidity.

The outdoor environment information can be acquired through use of, for example, different kinds of instruments such as a temperature sensor, a humidity sensor, an air pressure sensor, an anemometer, an airflow meter, and an anemoscope, and can also be acquired from weather forecasts and the like provided through television, radio, weather data distribution services, and the like. In an exemplary case of acquiring the outdoor temperature, humidity, weather, and the like at a time of several hours later as the outdoor environment information, it is possible to use weather forecasts provided through television, radio, weather data distribution services, and the like.

The indoor environment includes information such as atmospheric pressure, a wind speed, and a wind direction in addition to a temperature and a humidity. The indoor environment is adjusted by controlling indoor environment adjustment means 30 for adjusting the indoor environment in the small room 20. The indoor environment adjustment means 30 can be controlled without manual operation (automatically) or can be controlled manually.

In this manner, the outdoor environment information is acquired, and the indoor environment is adjusted based on the acquired outdoor environment information, to thereby be able to maintain the environment inside the small room 20, which exerts an influence on a temperature inside a storage container 11, at a constant level even in a cold season and stabilize quality of the fungal bed.

### (Embodiment of Indoor Environment Adjustment System)

Next, an indoor environment adjustment system according to an embodiment of the present invention is described by taking an example with reference to the accompanying drawings. The indoor environment adjustment system according to the present invention is a system for adjusting an environment in the small room 20 in which the fungal bed production device 10 is installed.

As an example, the indoor environment adjustment system illustrated in FIG. 1 and FIG. 2 includes the fungal bed production device 10 for producing a fungal bed, the small room 20 in which the fungal bed production device 10 is installed, the indoor environment adjustment means 30 for adjusting the indoor environment inside the small room 20, outdoor information acquisition means 40 for acquiring the outdoor environment information on the outside of the small room 20, and control means 50 for controlling the indoor environment adjustment means 30 based on the outdoor environment information acquired by the outdoor information acquisition means 40.

The fungal bed production device 10 is a device for producing a fungal bed. The fungal bed production device 10 can produce a fermented fungal bed by promoting anaerobic fermentation or aerobic fermentation while stirring a moist substrate (such as cotton hulls, peat pulp, corncobs, rice straw, peanut husks, rice husks, or barley husks). The fungal bed production device 10 can be used to produce a fungal bed for cultivation of oyster mushrooms, shiitake mushrooms, maitake mushrooms, shimeji mushrooms, and other mushrooms (wood-decay fungi) other than mycorrhizal fungi.

As an example, the fungal bed production device 10 illustrated in FIG. 1 and FIG. 2 includes the storage container 11, heating means 12, stirring means 13, air blowing means 14, a temperature sensor 15, and a controller 16 for controlling different kinds of devices that form the fungal bed production device 10. The storage container 11 is installed on a rack 17.

The storage container 11 is a tank for producing a fermented fungal bed. As illustrated in FIG. 1 and FIG. 2, the storage container 11 in this embodiment includes a tank main body 11a into which the substrate is to be put, and an upper lid 11b to be put on the tank main body 11a. The tank main body 11a in this embodiment is a container having both end sides in the longitudinal direction closed by side walls and having a U-shaped cross-section with an upper side thereof opened, and is configured such that an opening portion on the upper side can be opened and closed by the upper lid 11b. The storage container 11 in this embodiment is made of stainless steel having a high thermal conductivity.

The tank main body 11a is provided with a fungal bed outlet 11c (FIG. 2) for delivering the finished fungal bed to the outside. The fungal bed outlet 11c can be opened and closed by an opening-and-closing door. The upper lid 11b is provided with a material inlet 11d for putting the substrate (material) into the tank main body 11a, a water supply port 11e for introducing water (including hot water; the same applies hereinafter) supplied from water adding means (not shown) into the tank main body 11a, an air supply port 11f for introducing cool air supplied from the air blowing means 14 into the tank main body 11a, an air discharge port 11g for discharging cool air that has passed through the tank main body 11a toward the tank main body 11a, and inoculum inlets 11h for putting inocula thereinto.

The heating means 12 is means for heating the tank main body 11a and the substrate and the like in the tank main body 11a. In this embodiment, a planar heater is used as the heating means 12. The planar heater is provided along an outer surface of the tank main body 11a. The planar heater can be provided on the front surface of the tank main body 11a, but can also be provided only partially. As the heating means 12, means other than a planar heater can be used. Although not shown, a heat-insulating sheet can be installed on an outer periphery of the fungal bed production device 10 during a low-temperature period, for example, during a severe wintertime.

The stirring means 13 is means for stirring the substrate and the like in the storage container 11. As an example, the stirring means 13 illustrated in FIG. 1 and FIG. 2 includes a rotary shaft 13a arranged along a longitudinal direction of the storage container 11, a plurality of stirring blades 13b held by the rotary shaft 13a, a drive motor 13M for driving the rotary shaft 13a, and a transmission mechanism 13c for transmitting power of the drive motor 13M to the rotary shaft 13a. When the drive motor 13M is powered on, the rotary shaft 13a and the stirring blades 13b are rotated, and the substrate and the like in the tank main body 11a are stirred by a rotational force of the rotary shaft 13a and the stirring blades 13b.

The air blowing means 14 (FIG. 2) is means for supplying cooling air used for cooling the substrate and the like into the tank main body 11a. In this embodiment, a spot cooler is used as the air blowing means 14. The cool air generated by the air blowing means 14 is introduced into the tank main body 11a through the air supply port 11f, and passes through the tank main body 11a to be discharged from the air discharge port 11g.

The air blowing means 14 is merely an example, and the air blowing means 14 may be other than this. For example, means provided with air cooling means for cooling the air in the small room 20 and a blower for sending cooled air into the tank main body 11a may be used. In this case, it is possible to connect a cool air supply line to the air supply port 11f of the upper lid 11b and supply the cooled air from the cool air supply line into the tank main body 11a. In order to reliably prevent intrusion of various germs into the culture medium and contamination of the culture medium, it is preferred to provide the blower with a filter such as a high efficiency particulate air (HEPA) filter.

The temperature sensor 15 is means for detecting the temperature inside the storage container 11. A thermocouple, a resistance temperature detector (for example, sheathed-platinum resistance temperature detector), a thermistor, or the like can be used as the temperature sensor 15. In this embodiment, the temperature sensor 15 is provided between the air supply port 11f and the air discharge port 11g on an inner surface side of the upper lid 11b. An installation location of the temperature sensor 15 may be other than this. In place of the temperature sensor 15, a water vapor sensor for detecting a flow rate of water vapor inside the storage container 11 may be provided.

Information detected by the temperature sensor 15 can be used to determine whether or not the heating (heat conduction) is appropriately performed by the heating means 12. For example, when a temperature detected by the temperature sensor 15 is lower than a target temperature (for example, 100°C), it is determined that the heat conduction is not appropriately performed by the heating means 12. In this case, the heating means 12 may be controlled so as to increase output.

Meanwhile, when the temperature detected by the temperature sensor 15 is lower than the target temperature (for example, 100°C), it is determined that the heat conduction is appropriately performed by the heating means 12 and water turned to vapor has spread evenly in the substrate unevenly distributed in a bottom portion of the tank main body 11a.

The controller 16 is means for controlling different kinds of devices that form the fungal bed production device 10. The controller 16 in this embodiment is provided in a front portion of the fungal bed production device 10 on a clean area 21 side. With the controller 16, it is possible to set operating conditions (such as time and temperature).

Although illustration is omitted, the fungal bed production device 10 in this embodiment is communicably connected to an administrator terminal (for example, PC or tablet computer used by an administrator) used by the administrator, and is configured not only to be able to remotely control setting of the operating conditions for the fungal bed production device 10 but also to be able to remotely check an operation status of the fungal bed production device 10, progress of a production process, and the like.

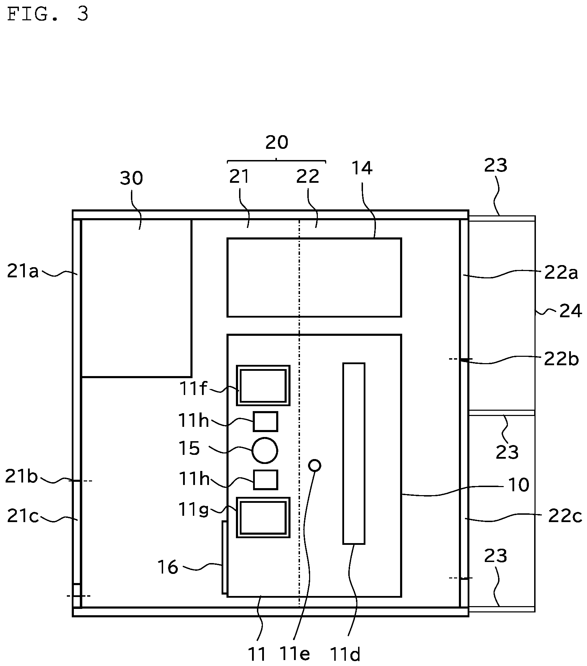

The small room 20 is a room partitioned from the outside, for installing the fungal bed production device 10. As an example, the inside of the small room 20 illustrated in FIG. 3 is divided into the clean area 21 and an unclean area 22. In this embodiment, the fungal bed production device 10 and the air blowing means 14 are installed at positions spanning the clean area 21 and the unclean area 22.

An outer wall 21a on the clean area 21 side is provided with a worker doorway 21b for a worker to enter and exit the clean area 21. The worker doorway 21b is configured to be able to be opened and closed by a worker doorway door 21c. An outer wall 22a on the unclean area 22 side is also provided with an opening portion 22b through which a person can enter and exit. The opening portion 22b is closed with a removable panel member 22c.

The clean area 21 is provided with the indoor environment adjustment means 30 for adjusting the indoor environment inside the small room 20. As described above, the indoor environment includes not only the temperature and the humidity but also the atmospheric pressure, the wind speed, and the wind direction.

The indoor environment adjustment means 30 includes not only an air conditioner capable of adjusting the temperature but also a heater (for example, sheet-shaped or panel-shaped heater) that prevents the temperature from leaking from the storage container 11, a circulator, a ventilation fan, and a positive pressure damper that eliminate unevenness in the temperature inside the room, and different kinds of other means capable of adjusting the indoor environment. One of or two or more of those can be used as the indoor environment adjustment means 30. The heater can be installed on an outer side of the tank main body 11a, and the circulator can be installed on the ceiling side. In the drawings, only the air conditioner is illustrated as an example of the indoor environment adjustment means 30.

In this embodiment, as illustrated in FIG. 1 and FIG. 3, a plurality of supporting members 23 are protruded from an outer side of the small room 20 on the unclean area 22 side, and a dust protection curtain 24 for preventing dust from flying is hung from the supporting members 23. As the dust protection curtain 24, one made of plastic or the like can be used.

The outdoor information acquisition means 40 is means for acquiring the outdoor environment information on the outside of the small room 20. As described above, the outdoor environment information includes the information such as the atmospheric pressure, the weather, the wind speed, and the wind direction in addition to the temperature and the humidity. The outdoor environment information also includes not only the information at the time of the acquisition but also the prediction information for a future time (several hours later or fixed time period starting several hours later). For example, the outdoor environment information (such as temperature, humidity, and weather) at the start time of the fungal bed production is included.

The outdoor environment information can be acquired through use of various instruments such as the temperature sensor, the humidity sensor, the atmospheric pressure sensor, the anemometer, the airflow meter, and the anemoscope, and can also be acquired from the weather forecasts and the like provided through television, radio, weather data distribution services, and the like. In an exemplary case of acquiring the outdoor temperature, humidity, weather, and the like at the time of several hours later as the outdoor environment information, it is possible to use the weather forecasts provided through the weather data distribution services and the like.

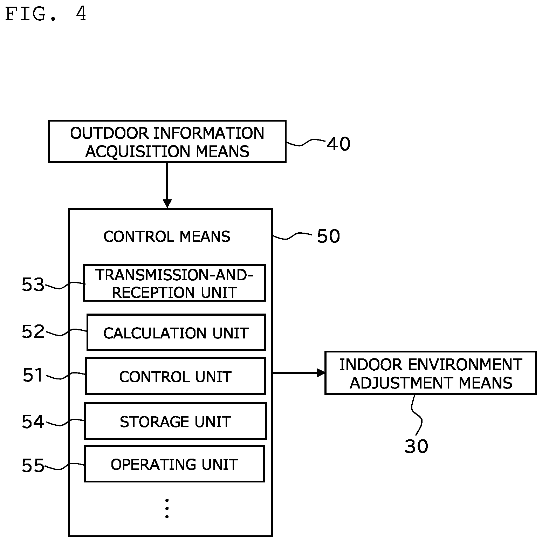

The control means 50 is means for controlling the indoor environment adjustment means 30 based on the outdoor environment information acquired by the outdoor information acquisition means 40. As the control means 50, for example, one including a control unit 51, a calculation unit 52, a transmission-and-reception unit 53, a storage unit 54, and an operating unit 55 as illustrated in FIG. 4 can be used. The control means 50 may be provided as built-in means or external means. When the external means is used, a PC (for example, mobile PC), a tablet computer, a smartphone, or the like can be used. In any one of the cases, it is preferred to use one including a monitor 56 of a touch panel type.

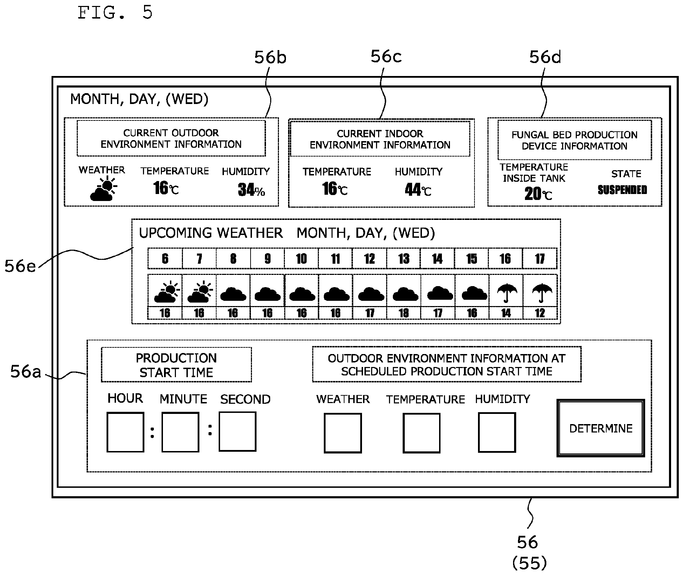

An operation screen to be displayed on the monitor 56 can include, for example, a condition input section 56a, an outdoor information display section 56b, an indoor information display section 56c, a device information display section 56d, and a prediction information display section 56e as illustrated in FIG. 5. The operation screen is not required to include all of those sections, and it suffices that the operation screen includes any one of or two or more of those sections.

The condition input section 56a is a section for inputting conditions such as a production start time. The outdoor information display section 56b is a section for displaying the outdoor environment information at a current time point (time of screen operation). The indoor information display section 56c is a section for displaying indoor environment information on the inside of the small room 20 at the current time point. The device information display section 56d is a section for displaying device information relating to the fungal bed production device 10 at the current time point. The prediction information display section 56e is a section for displaying the prediction information.

In the example illustrated in FIG. 5, the condition input section 56a is configured to display input fields of the production start time, the weather, the temperature, and the humidity as the conditions, the outdoor information display section 56b is configured to display the weather, the temperature, and the humidity at the current time point as the outdoor environment information, the indoor information display section 56c is configured to display the temperature and the humidity inside the room at the current time point as the indoor environment information, the device information display section 56d is configured to display the temperature inside the storage container 11 and an operating state at the current time point as the device information, and the prediction information display section 56e is configured to display the weather and the temperature for each hour during a period from the current time point until the time of several hours later as the prediction information. The pieces of information displayed in the condition input section 56a and the display sections 56b to 56e are merely examples, and information other than those may be used.

The control means 50 can be automatically operated by receiving the outdoor environment information transmitted from the outdoor information acquisition means 40, or can be operated by manually inputting the outdoor environment information. The input by the manual operation can be performed through the operating unit 55. In this case, for example, a scheduled production start time and the weather, temperature, and humidity at the scheduled production start time that have been acquired by the outdoor information obtaining means 40, and the like may be input to the condition input section 56a.

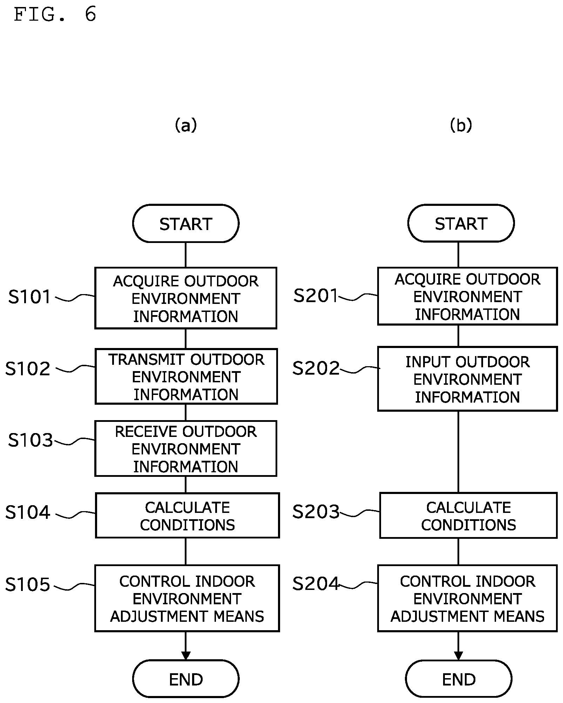

In a case in which the indoor environment adjustment means 30 is automatically controlled by the control means 50, for example, as illustrated in FIG. 6(a), the processing can be performed by: acquiring, by the outdoor information acquisition means 40, outdoor environment information (Step S101); then transmitting the outdoor environment information from the outdoor information acquisition means 40 (Step S102); receiving, by the transmission-and-reception unit, the outdoor environment information (Step S103); calculating conditions for the temperature inside the small room 20 to become an appropriate temperature set in advance based on the received outdoor environment information (Step S104); and controlling the indoor environment adjustment means 30 under the calculated control conditions (Step S105).

For example, assuming that the production start time for the fungal bed is a time of six hours later and the appropriate temperature set in advance for the temperature inside the small room 20 is 25°C, the processing can be performed by: receiving, by the transmission-and-reception unit 53, temperature information on the outside of the room at the time of six hours later, which has been transmitted from the outdoor information acquisition means 40; calculating, by the calculation unit 52, conditions for the temperature inside the small room 20 at the time of six hours later (preferably, during a period from the time of six hours later until a scheduled finish (production completion) time) to become 25°C based on the received temperature information; and controlling the indoor environment adjustment means 30 under the calculated conditions.

Meanwhile, in a case in which the indoor environment adjustment means 30 is manually controlled by the control means 50, for example, as illustrated in FIG. 6(b), the processing can be performed by: receiving, by the outdoor information acquisition means 40, outdoor environment information (Step S201); then manually inputting the outdoor environment information, which has been obtained by the outdoor information acquisition means 40 (Step S202); calculating, after completion of the input, based on the set conditions, conditions for the temperature inside the small room 20 to become an appropriate temperature set in advance (Step S203); and controlling the indoor environment adjustment means 30 under the calculated control conditions (Step S204).

For example, assuming that the production start time for the fungal bed is a time of six hours later and the appropriate temperature set in advance for the temperature inside the small room 20 is 25°C, the processing can be performed by: setting temperature information on the outside of the room at the time of six hours later, which has been obtained from the outdoor information acquisition means 40, on the operation screen displayed on the monitor 56; calculating, after completion of the setting, by the calculation unit 52, conditions for the temperature inside the small room 20 at the time of six hours later (preferably, during a period from the time of six hours later until a scheduled finish time) to become 25°C; and controlling the indoor environment adjustment means 30 under the calculated conditions.

The operations of the control means 50 are merely examples, and the control means 50 can be operated by another method. For example, with a finish time input section (not shown) being provided on the operation screen displayed on the monitor 56, the control means 50 can be operated by: inputting a desired finish time in the finish time input section; calculating, from the information displayed on the outdoor information display section 56b, the indoor information display section 56c, the prediction information display section 56e, and the like, control conditions for the indoor environment during a period from the production start time until the finish time to become the appropriate temperature set in advance; and controlling the indoor environment adjustment means 30 under the calculated control conditions.

The embodiment described herein is merely an example, and the indoor environment adjustment system according to the present invention can be configured in a manner other than that in this embodiment. Further, not all the components described in this embodiment are essential components, and unrequired components can be omitted as appropriate.

The indoor environment adjustment method and the indoor environment adjustment system according to the present application are provided strictly for maintaining the environment (temperature) inside the storage container 11 by adjusting the environment inside the small room 20, and are to be considered differently from those provided for directly controlling the temperature inside the storage container 11 or the like.

### Reference Signs List

- 10: fermented fungal bed production mixer (fungal bed production device)
- 11: storage container
- 11a: tank main body
- 11b: upper lid
- 11c: fungal bed outlet
- 11d: material inlet
- 11e: water supply port
- 11f: air supply port
- 11g: air discharge port
- 11h: inoculum inlet
- 12: heating means
- 13: stirring means
- 13a: rotary shaft
- 13b: stirring blade
- 13c: transmission mechanism
- 13M: drive motor
- 14: air blowing means
- 15: temperature sensor
- 16: controller
- 17: rack
- 20: small room
- 21: clean area
- 21a: outer wall (of clean area)
- 21b: worker doorway
- 21c: worker doorway door
- 22: unclean area
- 22a: outer wall (of unclean area)
- 22b: opening portion
- 22c: panel member
- 23: supporting member
- 24: dust protection curtain
- 30: indoor environment adjustment means
- 40: outdoor information acquisition means
- 50: control means
- 51: control unit
- 52: calculation unit
- 53: transmission-and-reception unit
- 54: storage unit
- 55: operating unit
- 56: monitor
- 56a: condition input section
- 56b: outdoor information display section
- 56c: indoor information display section
- 56d: device information display section
- 56e: prediction information display section

## Claims

1. An indoor environment adjustment method of adjusting an environment in a small room in which a fungal bed production device is installed, the indoor environment adjustment method comprising:
acquiring outdoor environment information on an outside of the small room; and
adjusting an indoor environment inside the small room based on the acquired outdoor environment information.

2. The indoor environment adjustment method according to claim 1, further comprising:
acquiring future outdoor environment information as the outdoor environment information; and
adjusting the indoor environment inside the small room based on the outdoor environment information.

3. The indoor environment adjustment method according to claim 1 or 2, further comprising:
acquiring, as the outdoor environment information, outdoor environment information at a start time point of production of a culture medium in the fungal bed production device, or outdoor environment information at one time point or two or more time points during a period from start of the production until completion of the production; and
adjusting the indoor environment inside the small room based on the outdoor environment information.

4. The indoor environment adjustment method according to any one of claims 1 to 3, further comprising acquiring, as the outdoor environment information, one of or two or more of a temperature, a humidity, and weather outside the small room.

5. An indoor environment adjustment system for adjusting an environment in a small room in which a fungal bed production device is installed, the indoor environment adjustment system comprising:
indoor environment adjustment means for adjusting an air environment inside the small room;
outdoor information acquisition means for acquiring outdoor environment information on an outside of the small room; and
control means for controlling the indoor environment adjustment means based on the outdoor environment information acquired by the outdoor information acquisition means.

6. The indoor environment adjustment system according to claim 5, wherein the outdoor information acquisition means is configured to acquire future outdoor environment information.

7. The indoor environment adjustment system according to claim 5 or 6, wherein the outdoor information acquisition means is configured to acquire outdoor environment information at a start time point of production of a culture medium in the fungal bed production device, or outdoor environment information at one time point or two or more time points during a period from start of the production until completion of the production.

8. The indoor environment adjustment system according to any one of claims 5 to 7, wherein the outdoor information acquisition means is configured to acquire, as the outdoor environment information, one of or two or more of a temperature, a humidity, and weather outside the small room.

9. The indoor environment adjustment system according to any one of claims 5 to 8,
wherein the outdoor information acquisition means and the control means are communicably connected to each other, and
wherein the control means is configured to acquire outdoor environment information transmitted from the outdoor information acquisition means and control the indoor environment adjustment means based on the acquired outdoor environment information.

10. The indoor environment adjustment system according to any one of claims 5 to 9,
wherein the control means includes a monitor on which a manually operable operating unit is to be displayed, and
wherein the monitor is configured to display one of or two or more of at least an outdoor information display section for displaying the outdoor environment information, an indoor information display section for displaying indoor environment information on an inside of the small room, and a device information display section for displaying device information relating to the fungal bed production device.
